## Europäisches Patentamt
## European Patent Office
## Office européen des brevets

(19)

(11) Numéro de publication: **0 123 003**
**B1**

(12)

# FASCICULE DE BREVET EUROPEEN

(45) Date de publication du fascicule du brevet: **01.07.87**

(51) Int. Cl.⁴: **B 23 G 5/14**

(21) Numéro de dépôt: **83440037.6**

(22) Date de dépôt: **28.06.83**

(54) Adapteur ou collet pour mandrins de taraudage.

(30) Priorité: **22.04.83 FR 8306797**

(43) Date de publication de la demande:
**31.10.84 Bulletin 84/44**

(45) Mention de la délivrance du brevet:
**01.07.87 Bulletin 87/27**

(84) Etats contractants désignés:
**AT BE CH DE GB IT LI LU NL SE**

(56) Documents cités:
**EP-A-0 051 097**
**DE-A-2 031 527**
**GB-A- 441 186**
**GB-A-1 501 785**
**US-A-1 394 795**
**US-A-3 298 481**
**US-A-3 466 681**
**US-A-4 174 918**

(73) Titulaire: **Pfalzgraf, Emile**
**7, rue de Neuwiller**
**F-67330 Bouxwiller (FR)**

(72) Inventeur: **Pfalzgraf, Emile**
**7, rue de Neuwiller**
**F-67330 Bouxwiller (FR)**

(74) Mandataire: **Nuss, Pierre**
**10, rue Jacques Kablé**
**F-67000 Strasbourg (FR)**

Courier Press, Leamington Spa, England.

EP 0 123 003 B1

## Description

La présente invention concerne le domaine des accessoires pour machines-outils, et plus particulièrement des mandrins de taraudage, et a pour objet un adapteur ou collet pour mandrins de taraudage avec limiteur de couple.

Dans les mandrins de taraudage, le taraud est généralement fixé dans une pièce mobile du mandrin au moyen d'un adapteur ou collet, qui est entraîné et fixé à l'aide d'un dispositif à billes, ou analogue. Un tel adapteur ou collet peut être muni ou non d'un limiteur de couple réglable.

Actuellement, des adapteurs à limiteur de couple règlable sont constitués par des dispositifs d'entraînement à crabots ou à billes, dans lesquels le règlage du couple est effectué au moyen de rondelles Belleville ou de ressorts, et l'entraînement du taraud est réalisé au moyen d'un carré d'entraînement prévu sur sa queue et coopérant avec un trou de forme et dimension correspondantes prévu dans le corps de l'adapteur ou collet, une douille à bille assurant le maintien et le centrage dudit taraud dans le corps.

Cependant, ces adapteurs ou collets connus ne permettent pas un règlage précis du couple en fonction des tarauds utilisés, et, en outre, il apparaît un jeu excessif entre les diverses pièces de l'adapteur dans le cas d'utilisation de tarauds de faible capacité.

Enfin, chaque corps d'adapteur étant par préférence pourvu d'un trou de section carrée donné pour l'entraînement du taraud, chaque variation de section de la queue de tarauds entraîne un changement du corps d'adapteur, de sorte qu'un grand nombre de ces corps est nécessaire.

On connaît, par ailleurs, un adapteur pour mandrin de taraudage muni d'un limiteur de couple qui comporte un porte-taraud formé par une douille chargée par ressort et par une queue, et dont le limiteur de couple est constitué par des billes qui sont éjectées vers l'extérieur en cas de dépassement du couple admissible. Cet adapteur suivant GB—A—1 501 785 ne permet cependant pas l'obtention d'un règlage fin du couple d'entraînement.

La présente invention a pour but de pallier ces inconvénients.

Elle a pour objet un adapteur ou collet pour mandrins de taraudage constitué par un corps de montage dans une pièce mobile du mandrin, par une douille à billes de retenue du taraud chargée par un ressort et par un carré d'entraînement du taraud, cet adapteur ou collet étant muni d'un dispositif limiteur de couple réglable constitué par une première pièce en forme de disque épais, montée à rotation libre sur le corps de montage, pourvue, sur une face, à intervalles réguliers, de premiers logements, s'étendant radialement, pour des éléments roulants, et munie, du côté opposé auxdits premiers logements, de deux tenons d'entraînement coopérant avec la rainure transversale de la pièce mobile du mandrin, par une deuxième pièce en forme de disque épais; cette deuxième pièce étant montée avec possibilité de coulissement sur le corps contre l'action d'un empilement de rondelles Belleville, logé dans un couvercle solidaire à une extrémité de la première pièce, et par un écrou de réglage de la pression des rondelles fermant le couvercle à son extrémité libre, et pouvant être bloqué au moyen d'une ou de plusieurs vis radiales, caractérisé en ce que les éléments roulants sont en forme de premiers rouleaux cylindriques, et en ce que la deuxième pièce est munie de seconds logements logeant à intervalles réguliers, les premiers rouleaux cylindriques s'étendant radialement et destinés à coopérer avec des logements de la première pièce en forme de disque, et est munie de deux autres logements diamétralement opposés, s'étendant axialement, et destinés à coopérer avec des seconds rouleaux cylindriques, d'entraînement en rotation du corps, logés dans des rainures longitudinales correspondantes dudit corps.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels:

la figure 1 est une vue en élévation latérale et en coupe d'un adapteur ou collet conforme à l'invention;

la figure 2 est une vue en élévation frontale de la première pièce en forme de disque;

la figure 3 est une vue en élévation latérale et en coupe suivant la figure 2;

la figure 4 est une vue analogue à celle de la figure 2 de la deuxième pièce en forme de disque;

la figure 5 est une vue analogue à celle de la figure 3 de la pièce suivant la figure 4;

la figure 6 représente, en élévation latérale et en coupe, une variante de réalisation de l'invention; et

la figure 7 est une vue en élévation latérale et en coupe d'une autre variante de réalisation.

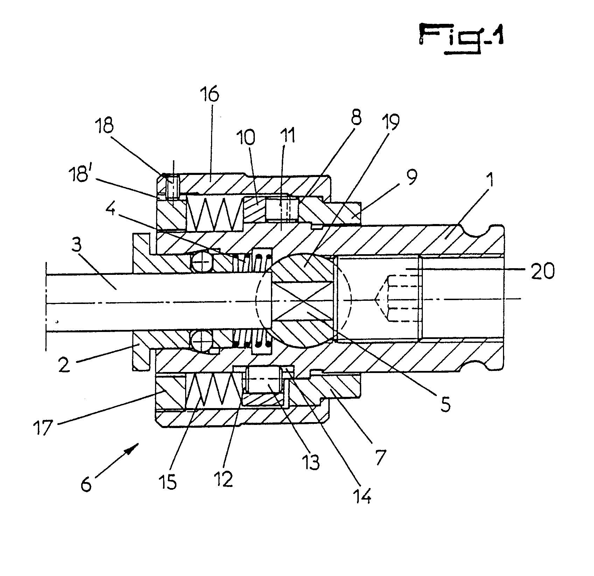

La figure 1 des dessins annexés représente, à titre d'exemple, un adapteur ou collet à limiteur de couple règlable pour mandrin de taraudage, qui est essentiellement constitué par un corps 1 de montage dans une pièce mobile du mandrin, par une douille à billes 2 de retenue du taraud 3, qui est chargée par un ressort 4, par un carré 5 d'entraînement du taraud 3, et par un dispositif limiteur de couple règlable 6.

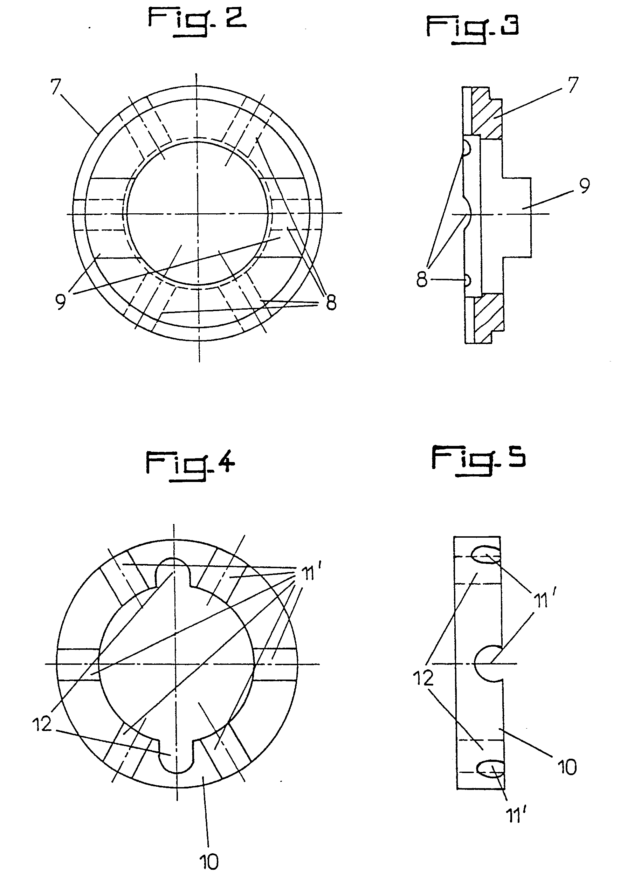

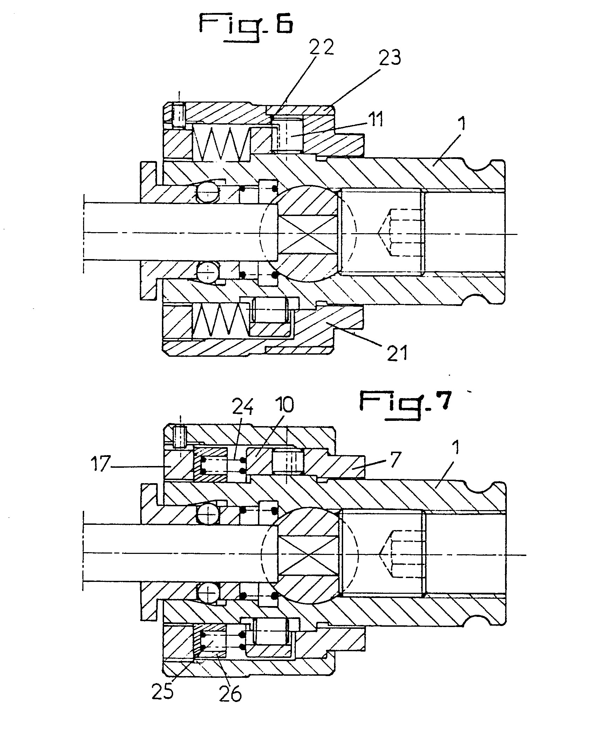

Le dispositif 6 est constitué par une première pièce en forme de disque épais 7, qui est montée à rotation libre sur le corps 1, et qui est pourvue, sur une face, de premiers logements 8 pour des éléments roulants 11 sous forme de premiers rouleaux cylindriques, disposés à intervalles réguliers, et s'étendant radialement, et, du côté opposé aux logements 8, de deux tenons d'entraînement 9 destinés à coopérer avec la rainure transversale de la pièce mobile du mandrin (figures 1 à 3), et par une deuxième pièce en forme de disque épais 10 (figures 4 et 5), qui loge à intervalles réguliers les rouleaux cylindriques 11, qui s'étendent radialement et coopèrent avec les logements 8 de la pièce 7. Cette deuxième pièce 10 est munie, en outre, de deux autres logements 12 diamétralement opposés et s'étendant axialement, qui coopèrent avec des seconds rouleaux cylindriques 13 d'entraînement en rotation du corps 1 logées dans des rainures longitudinales 14 dudit corps 1. Cette pièce 10 est montée sur le corps 1 avec possibilité de coulissement contre l'action d'un empilement de rondelles Belleville 15, à l'intérieur d'un couvercle 16 solidaire à une de ses extrémités de la première pièce 7, et fermé à son autre extrémité par un écrou 17 de réglage de la pression des rondelles 15, qui peut être bloqué au moyen d'une ou de plusieurs vis radiales 18 pénétrant dans des encoches 18' de la circonférence de l'écrou 17.

La première pièce en forme de disque épais 7 est avantageusement interchangeable et présente des profondeurs de logements 8 variables en fonction des couples à transmettre. Ainsi, il est possible de régler, déjà avant le montage, une partie du couple en fonction d'une gamme de tarauds donnée par réduction ou augmentation de la hauteur de pénétration des rouleaux 11 dans les logements 8 de la pièce 7, de sorte qu'un réglage final du couple au moyen des rondelles Belleville 15 et de l'écrou 17 peut être effectué dans une plage de réglage plus étroite, donc mieux répartie par rapport aux tarauds à utiliser, et avec une plus grande précision.

L'entraînement en rotation de la pièce 7 s'effectue par l'intermédiaire des tenons d'entraînement 9, qui coopèrent avec la rainure transversale de la pièce mobile du mandrin de taraudage, et la pièce 7 transmet un couple d'entraînement à la pièce 10 par l'intermédiaire des rouleaux 11 fixés dans les logements 11' de la pièce 10, et qui pénètrent dans les logements 8 de la pièce 7 où ils sont maintenus par l'action des rondelles 15. La pièce 10 étant solidaire en rotation du corps 1 par l'intermédiaire des rouleaux 13, qui font office de clavettes, entraîne ce dernier en rotation et ainsi le taraud 3 fixé dans le carré 5 dudit corps 1.

L'utilisation de rouleaux 13 à la place de clavettes permet d'éliminer des frottements néfastes au bon fonctionnement.

Conformément à une caractéristique préférée de l'invention, le carré 5 d'entraînement du taraud 3 est réalisé dans une pièce interchangeable 19 insérée dans le corps 1 transversalement à son axe longitudinal (figures 1, 6 et 7) et bloquée en position lors de montage par une vis centrale 20 du corps 1, ou un autre dispositif de fixation. Grâce à ce mode de réalisation, une multitude de tarauds présentant des types de carrés d'entraînement différents peut être utilisée avec seulement deux ou trois corps 1 différents par adapteur contrairement aux adapteurs existant actuellement avec carré d'entraînement 5 intégré.

Les rouleaux cylindriques 11 de transmission du couple entre les pièces 7 et 10 sont avantageusement au nombre de six, mais peuvent également être d'un nombre inférieur ou supérieur, et la fixation du taraud 3 dans le corps 1 s'effectue au moyen d'une douille à billes 2, dont les billes coopèrent avec un cône intérieur du corps 1 pour s'appliquer sur la surface de la queue du taraud 3 sous l'action du ressort 4.

Tant que le couple préréglé n'est pas dépassé, le taraud 3 est entraîné en rotation par le corps 1 au moyen des pièces 10 et 7 de la manière décrite ci-dessus. Dès que le couple dépasse la valeur prescrite, la pièce 7 se désolidarise de la pièce 10 qui comprime les rondelles 15, de sorte que les rouleaux 11 sont libérés des logements 8 de la pièce 7, qui tourne alors librement sans entraîner le taraud 3. Cette limitation de couple est effective dans les deux sens de rotation, et dès atteinte d'un couple normal, les rouleaux 11 se réenclenchent pour un fonctionnement normal.

Le réglage du couple est effectué au moyen d'une clé dynamométrique par serrage de l'écrou 17, qui est bloqué ensuite au moyen de la ou des vis 18 pénétrant dans des encoches 18' prévues sur la circonférence de l'écrou 17.

La figure 6 représente une variante de réalisation de l'adapteur ou collet suivant la figure 1, dans laquelle le couvercle est en une seule pièce 21 avec la première pièce en forme de disque épais, cette pièce 21 étant pourvue à cet effet, sur sa circonférence, de perçages 22 pour la mise en place des rouleaux cylindriques d'entraînement 11, ces perçages étant fermés par une bague 23 de retenue glissée et maintenue sur la pièce 21, et les rouleaux d'entraînement 11 sont avantageusement maintenus dans les logements de la pièce 21.

Selon une autre variante de réalisation de l'invention, et comme le montre la figure 7, il est également possible de remplacer l'empilement de rondelles Belleville par des ressorts 24 s'appliquant à intervalles réguliers sur la deuxième pièce en forme de disque épais 10 et guidés dans des logements borgnes 25 d'une bague 26 montée à coulissement sur le corps 1, la pression de ces ressorts 24 étant réglée au moyen de l'écrou 17.

Conformément à une autre caractéristique préférée de l'invention, non représentée aux dessins annexés, il est également possible de charger la pièce 10 avec un empilement de rondelles Belleville 15 elle-même chargée par des ressorts 24 en fonction du tarage du couple désiré.

Bien entendu, l'invention n'est pas limitée aux modes de réalisation décrits et représentés aux dessins annexés.

**Revendications**

1. Adapteur ou collet pour mandrins de taraudage constitué par un corps (1) de montage dans une pièce mobile du mandrin, par une douille à billes (2) de retenue du taraud (3) chargée par un ressort (4) et par un carré (5) d'entraînement du taraud (3), cet adapteur ou collet étant muni d'un dispositif limiteur de couple réglable (6) constitué par une première pièce (7) en forme de disque épais, montée à rotation libre sur le corps de montage (1), pourvue, sur une face, à intervalles réguliers, de premiers logements (8), s'étendant radialement, pour des éléments roulants (11), et munie, du côté opposé auxdits premiers logements (8), de deux tenons d'entraînement (9) coopérant avec la rainure transversale de la pièce mobile du mandrin, par une deuxième pièce (10) en forme de disque épais; cette deuxième pièce (10) étant montée avec possibilité de coulissement sur le corps (1) contre l'action d'un empilement de rondelles Belleville (15), logé dans un couvercle (16) solidaire à une extrémité de la première pièce (7), et par un écrou (17) de réglage de la pression des rondelles (15) fermant le couvercle (16) à son extrémité libre, et pouvant être bloqué au moyen d'une ou de plusieurs vis radiales (18), caractérisé en ce que les éléments roulants (11) sont en forme de premiers rouleaux cylindriques, et en ce que la deuxième pièce est munie de seconds logements (11') logeant à intervalles réguliers, les premiers rouleaux cylindriques (11) s'étendant radialement et destinés à coopérer avec les logements (8) de la première pièce en forme de disque (7), et est munie de deux autres logements (12) diamétralement opposés, s'étendant axialement, et destinés à coopérer avec des seconds rouleaux cylindriques (13), d'entraînement en rotation du corps (1), logés dans des rainures longitudinales (14) correspondantes dudit corps (1).

2. Adapteur, suivant la revendication 1, caractérisé en ce que la première pièce (7) est interchangeable et présente des profondeurs de premiers logements (8) variables en fonction des couples à transmettre.

3. Adapteur, suivant la revendication 1, caractérisé en ce que le carré (5) d'entraînement du taraud (3) est réalisé dans une pièce interchangeable (19) insérée dans le corps (1) transversalement à son axe longitudinal et bloquée en position lors du montage par une vis centrale (20) du corps (1), ou un autre dispositif de fixation.

4. Adapteur, suivant la revendication 1, caractérisé en ce que le couvercle est en une seule pièce (21) avec la première pièce (7), cette seule pièce (21) étant pourvue à cet effet, sur sa circonférence, de perçages (22) pour la mise en place des premiers rouleaux cylindriques d'entraînement (11), ces perçages étant fermés par une bague (23) de retenue glissée et maintenue sur la seule pièce (21), et les premiers rouleaux cylindriques (11) sont maintenus dans des logements de la seule pièce (21).

5. Adapteur, suivant la revendication 1, caractérisé en ce que l'empilement de rondelles Belleville est remplacé par des ressorts (24) s'appliquant à intervalles réguliers sur la deuxième pièce en forme de disque épais (10) et guidés dans des logements borgnes (25) d'une bague (26) montée à coulissement sur le corps (1), la pression de ces ressorts (24) étant réglée au moyen de l'écrou (17).

6. Adapteur, suivant l'une quelconque des revendications 1 et 4, caractérisé en ce que la deuxième pièce (10) est chargée avec un empilement de rondelles Belleville (15) elle-même chargée par des ressorts (24) en fonction du tarage du couple désiré.

**Patentansprüche**

1. Umrüstteil oder Halslager für Werkzeugspanner zum Gewindebohren, bestehend aus einem Körper (1) zur Befestigung in einem beweglichen Stück des Werkzeugspanners, aus einer durch eine Feder (4) beanspruchte Kugelhülse (2) zur Haltung des Gewindebohrers (3) und aus einem Vierkant (5) zur Mitnahme des Gewindebohrers (3), wobei dieses Umrüstteil oder Halslager mit einem einstellbaren Antriebsmoment (6), bestehend aus einem ersten Stück (7), in Form einer dicken Scheibe, ausgestattet ist, das frei drehbar auf dem Montagekörper (1) montiert, an einer Seite, in regelmäßigen Abständen, mit sich radial um Rollenelemente (11) erstreckenden ersten Aufnahmen (8) versehen ist, und auf der den besagten ersten Aufnahmen (8) gegenüberliegenden Seite zwei mit der Querrille des beweglichen Stücks des Werkzeugspanners zusammenwirkende Mitnehmer (9) aufweist, aus einem zweiten Stück (10) in Form einer dicken Scheibe; wobei dieses zweite Stück (10) gleitbar auf dem Körper (1) gegen die Einwirkung eines in einer mit einem Ende des ersten Stückes (7) fest verbundenen Kappe (16) liegenden Stapels Belleville-Ringe (15) montiert ist, und aus einer Schraubenmutter (17) zur Einstellung des Drucks der die Kappe (16) an ihrem freien Ende abschließenden Ringe (15), und die mit Hilfe einer oder mehrerer radialer Schrauben (18) festgestellt werden kann, dadurch gekennzeichnet, daß die Rollenelemente (11) als erste zylindrische Rollen ausgebildet sind, und daß das zweite Stück mit in regelmäßigen Abständen sitzenden zweiten Aufnahmen (11') versehen ist, wobei sich die ersten zylindrische Rollen (11) radial erstrecken und dazu dienen, mit den Aufnahmen (8) des ersten Stücks in Form einer Scheibe (7) zusammenzuwirken, und mit zwei weiteren, diametral gegenüberliegenden Aufnahmen (12) ausgestattet ist, die sich axial erstrecken, und dazu dienen, mit in entsprechenden Längsrillen (14) des besagten Körpers (1) untergebrachten, zweiten zylindrischen Rollen (13) zum Rotationsantrieb des Körpers (1) zusammenzuwirken.

2. Umrüstteil nach Anspruch 1, dadurch gekennzeichnet, daß das erste Stück (7) austauschbar ist und Tiefen für erste Aufnahmen (8) aufweist, die abhängig von den zu übertragenden Momenten variabel sind.

3. Umrüstteil nach Anspruch 1, dadurch gekennzeichnet, daß der Vierkant (5) für die Mitnahme des Gewindebohrers (3) in einem austauschbaren Stück (19) ausgeführt ist, das in den Körper (1) quer zu seiner Längsachse eingesetzt ist und bei der Montage durch eine Zentralschraube (20) des Körpers (1), oder eine andere Befestigungsvorrichtung in der Position blockiert wird.

4. Umrüstteil nach Anspruch 1, dadurch gekennzeichnet, daß die Kappe mit dem ersten Stück (7) ein einziges Stück (21) bildet, wobei dieses einzige Stück (21) zu diesem Zweck an seinem Umfang mit Bohrungen (22) zum Einpassen von ersten zylindrischen Antriebsrollen (11) versehen ist, wobei diese Bohrungen durch einen Ring (23) zum gleitenden Sitz und zur Halterung auf dem einzigen Stück (21) verschlossen werden, und die ersten zylindrischen Rollen (11) in Aufnahmen des einzigen Stücks (21) gehalten werden.

5. Umrüstteil nach Anspruch 1, dadurch gekennzeichnet, daß der Stapel Belleville-Ringe durch Federn (24) ersetzt wird, die in regelmäßigen Abständen auf das zweite Stück in Form einer dicken Scheibe (10) drücken und in blinden Aufnahmen (25) eines gleitbar auf dem Körper (1) befestigten Ringes (26) geführt werden, wobei der Druck dieser Federn (24) mit Hilfe der Schraubenmutter (17) eingestellt wird.

6. Umrüstteil nach einem der Ansprüche 1 und 4, dadurch gekennzeichnet, daß das zweite Stück (10) mit einem Stapel Belleville-Ringe (15) belastet wird, das selbst durch Federn (24) abhängig von der Abweichung des gewünschten Moments beansprucht wird.

**Claims**

1. An adapter or collet for tap holders consisting of a mounting body (1) in a movable part of the holder, of a bush (2) with balls for retaining the tap (3) loaded by a spring (4) and of a driving square (5) for the tap (3), this adapter or collet being equipped with a variable torque limiting device (6) consisting of a first part (7) in the form of a thick disc, mounted for free rotation on the mounting body (1), provided, on one face, at regular intervals, with first recesses (8), extending radially, for rolling elements (11), and which is equipped, at the opposite side to said first recesses (8), with two driving tenons (9) cooperating with the transverse groove in the movable part of the holder, of a second part (10) in the form of a thick disc, this second part (10) being mounted with the possibility of sliding on the body (1) against the action of a stack of Belleville washers (15), housed in a cover (16) rigidly connected to one end of the first part (7), and of a nut (17) for regulating the pressure of the washers (15) closing the cover (16) at its free end, and capable of being locked by means of one or more radial screws (18), characterised in that the rolling elements (11) are in the form of first cylindrical rollers, and in that the second part is equipped with second recesses (11') housing the first cylindrical rollers (11) at regular intervals, extending radially and adapted to co-operate with the recesses (8) in the first part in the form of a disc (7), and is equipped with two other diametrically opposite recesses (12), extending axially, and adapted to co-operate with second cylindrical rollers (13), for driving the body (1) in rotation, housed in corresponding longitudinal grooves (14) in said body (1).

2. An adapter, according to claim 1, characterised in that the first part (7) is interchangeable and has variable depths of first recesses (8) depending on the torques to be transmitted.

3. An adapter, according to claim 1, characterised in that the square (5) for driving the tap (3) is realised in an interchangeable member (19) inserted in the body (1) transversely to its longitudinal axis and locked in position on assembly by a central screw (20) in the body (1), or another fixing device.

4. An adapter, according to claim 1, characterised in that the cover is in a single part (21) with the first part (7), this single part (21) being provided for this purpose, at its circumference, with bores (22) for placing the first cylindrical drive rollers (11) in position, these bores being closed by a retaining ring (23) slid over and held on the single part (21), and the first cylindrical rollers (11) are held in recesses in the single part (21).

5. An adapter, according to claim 1, characterised in that the stack of Belleville washers is replaced by springs (24) bearing at regular intervals against the second part in the form of a thick disc (10) and guided in blind holes (25) in a ring (26) mounted for sliding on the body (1), the pressure of these springs (24) being adjusted by means of the nut (17).

6. An adapter, according to either one of claims 1 and 4, characterised in that the second part (10) is loaded with a stack of Belleville washers (15) itself loaded by springs (24) depending on the calibration of the desired torque.

Fig.1

0 123 003

# Fig. 2

# Fig. 3

# Fig. 4

# Fig. 5

2

Fig.6

Fig.7